# EUROPEAN PATENT SPECIFICATION

(11) **EP 3 125 158 B1**
(45) Date of publication and mention of the grant of the patent: **10.07.2019**
(21) Application number: 16181425.6
(22) Date of filing: 27.07.2016
(51) Int. Cl.: G06K 9/00, G06K 9/03, G06K 9/46, H04N 1/40

(54) **METHOD AND DEVICE FOR DISPLAYING IMAGES**
VERFAHREN UND VORRICHTUNG ZUR ANZEIGE VON BILDERN
PROCEDE ET DISPOSITIF D'AFFICHAGE D'IMAGES

(30) Priority: 28.07.2015 CN 201510452003
(43) Date of publication of application: 01.02.2017
(73) Proprietor: Xiaomi Inc., Beijing 100085 (CN)
(72) Inventor: ZHANG, Tao, Beijing 100085 (CN); LONG, Fei, Beijing 100085 (CN); CHEN, Zhijun, Beijing 100085 (CN)
(74) Representative: Cougard, Jean-Marie

(56) References cited:
- EP-A1- 2 312 462
- WO-A1-2015/167975
- WO-A2-2008/045521
- CN-A- 101 777 059
- CN-A- 103 955 481
- US-A1- 2010 235 400
- US-A1- 2014 301 653
- US-B1- 8 379 939
- US-B1- 8 724 910

## Description

### TECHNICAL FIELD

The present disclosure generally relates to the field of terminal technology, and more particularly, to a method and a device for displaying images.

### BACKGROUND

With the rapid development of terminal technology, more and more terminals such as mobile phones, tablet computers, computers and the like have been provided with image display functions. These terminals can display multiple images stored therein. In the related art, when a terminal displays stored multiple images, the terminal generally displays them as thumbnails in a storing time order of the images. However, when some of the multiple images are similar to each other, or some of them have poor qualities, the image display effect will be unsatisfactory. Therefore, there is a demand for a method for displaying images which has an improved display effect.
Document WO 2008/045521 A2 discloses a face-based image clustering method, wherein parameter values are extracted from face regions and face regions associated with parameter values satisfying a cluster seed predicate are classified as cluster seed face regions into clusters, in the view of building for each cluster a face model.
Document US 8 379 939 discloses a method wherein face detection is performed on a plurality of images to identify a plurality of faces and activated faces are clustered into groups based on distances between pairs of activated faces. A representative face is selected from each group resulting from the clustering and the representative faces are displayed.

### SUMMARY

The invention is defined in the appended set of claims.

In order to solve the problem in the related art, the present disclosure provides a method a device for displaying images.

According to a first aspect of embodiments of the present disclosure, there is provided a method implemented by a device (or terminal) for displaying images, including:
when receiving an instruction for opening an album, clustering similar images in the album to obtain a plurality of groups of images;
selecting an image from each of the groups of images as a representative image of the group of images; and
displaying the representative images of the groups of images.

In the embodiment of the present disclosure, when the terminal receives an instruction for opening an album, the terminal clusters similar images in the album to obtain a plurality of groups of images; the terminal selects an image from each of the groups of images as a representative image of the group of images, the representative image having a better image quality; and the terminal displays the representative images of the groups of images which have better image qualities. Thereby, it can improve the display effect of the representative images of the groups of images.

In connection with the first aspect, in a first possible implementation of the above first aspect, said selecting of an image from each of the groups of images as a representative image of the group of images includes:
based on light quality parameters of images in the group of images, selecting from the group of images, each image which has a light quality parameter less than a light threshold, to obtain a first set of images.

In the embodiment of the present disclosure, based on light quality parameters of images in the group of images, the terminal can select from the group of images, images with better light qualities. Thereby, it can avoid displaying the first set of images as having too dark images or images with excess light exposure, thus improving the image display effect.

In connection with the first possible implementation of the first aspect, in a second possible implementation of the above first aspect, the method further includes:

based on face angles of images in the first set of images, selecting from the first set of images, each image which has a face angle within a predetermined (or designated) angle range, to obtain a second set of images.

In the embodiment of the present disclosure, based on face angles of images in the first set of images, the terminal can select from the first set of images, images with proper face postures. Thereby, it can avoid displaying the second set of images as having less proper face postures, but having images selected to meet the visual requirements of the user, thus improving the image display effect.

In connection with the second possible implementation of the first aspect, in a third possible implementation of the above first aspect, the method further includes:
based on eye features of images in the second set of images, selecting from the second set of images, each image which has no closed eyes, to obtain a third set of images.

In the embodiment of the present disclosure, based on eye features of images in the second set of images, the terminal can select from the second set of images, images with no closed eyes. Thereby, it can avoid displaying the third set of images as having closed eyes, thus improving the display effect of the selected images.

In connection with the third possible implementation of the first aspect, in a fourth possible implementation of the above first aspect, the method further includes:
based on face clarities of images in the third set of images, selecting from the third set of images, each image which has a face clarity larger than or equal to a predetermined clarity, to obtain the representative image of the group of images.

In the embodiment of the present disclosure, based on face clarities of images in the third set of images, the terminal can select from the third set of images, images with better face clarities, thus improving the image clarities of the representative images to be displayed.

In connection with the first possible implementation of the first aspect, in a fifth possible implementation of the above first aspect, before said selecting from the group of images, based on light quality parameters of images in the group of images, each image which has a light quality parameter less than a light threshold, to obtain a first set of images, the method further includes:
transforming the images in the group of images into gray-scale images;
for each of the images in the group of images, determining a first number of pixels and a second number of pixels based on a gray-scale image corresponding to the image, wherein the first number of pixels each having a gray scale less than a first gray-scale threshold and the second number of pixels each having a gray scale larger than a second gray-scale threshold are present in the gray-scale image corresponding to the image;
determining a first ratio of the first number to a total number of pixels in the gray-scale image, and a second ratio of the second number to the total number; and
determining the light quality parameter of the image based on the first ratio and the second ratio.

In the embodiment of the present disclosure, the terminal can select images with better light qualities from the group of images based on light quality parameters by determining the light quality parameters of the images. Thereby, it can avoid displaying the first set of images as having too dark images or images with excess light exposure, thus improving the image display effect.

In connection with the second possible implementation of the first aspect, in a sixth possible implementation of the above first aspect, before said selecting from the first set of images, based on face angles of images in the first set of images, each image which has a face angle within a predetermined angle range, to obtain a second set of images, the method further includes:
acquiring face feature points of the images in the first sets of images;
for each of the images in the first sets of images, selecting from the image a first feature point and a second feature point, wherein the first feature point and the second feature point are feature points symmetrical with respect to a nose in a left-to-right direction;
determining a first distance between the first feature point and a predetermined feature point and a second distance between the second feature point and the predetermined feature point; and
determining the face angle of the image based on the first distance and the second distance.

In the embodiment of the present disclosure, the terminal can select images with proper face postures from the first set of images by determining the face angles of the images. Thereby, it can avoid displaying the second set of images as having less proper face postures, but having images selected to meet the visual requirements of the user, thus improving the image display effect.

In connection with the fourth possible implementation of the first aspect, in a seventh possible implementation of the above first aspect, before said selecting from the third set of images, based on face clarities of images in the third set of images, each image which has a face clarity larger than or equal to a predetermined clarity, to obtain the representative image of the group of images, the method further includes:
for each of the images in the third set of images, acquiring a pixel value of each pixel point contained in a face region of the image;
based on the pixel value of each pixel point, determining a cumulative gradient value of the face region; and
determining the cumulative gradient value as the face clarity of the image.

In the embodiment of the present disclosure, the terminal can select from the third set of images, images with better face clarities, by determining the face clarities of the images, thus improving the image clarities of the representative images to be displayed.

In connection with the first aspect, in an eighth possible implementation of the above first aspect, said displaying of the representative images of the groups of images includes:
rotating and aligning the representative images of the groups of images such that face directions of the representative images of the groups of images are the same;
adjusting sizes of the aligned representative images of the groups of images such that the sizes of face regions of the adjusted representative images of the groups of images are the same; and
displaying the adjusted representative images in a predetermined dynamic manner.

In the embodiment of the present disclosure, the terminal rotates and aligns the representative images of the groups of images and displays the adjusted representative images in a predetermined dynamic manner. Thereby, it can enrich display manners and improve the display effect of the representative images.

In connection with the eighth possible implementation of the first aspect, in a ninth possible implementation of the above first aspect, when there are more than one representative image for a group of images, selecting randomly one or two representative images for displaying.

In the embodiment of the present disclosure, when there are more than one representative image for a group of images, the terminal selects randomly one or two representative images for displaying. Thereby, it can avoid the problem that it seems monotonous to display multiple representative images.

In one particular embodiment, the steps of the method for displaying images are determined by computer program instructions.

Consequently, according to a fourth aspect, the invention is also directed to a computer program for executing the steps of a method for displaying images as described above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

According to a second aspect of embodiments of the present disclosure, there is provided a device for displaying images, including:
a clustering module configured to, when an instruction for opening an album is received, cluster similar images in the album to obtain a plurality of groups of images;
a selecting module configured to select an image from each of the groups of images as a representative image of the group of images; and
a displaying module configured to display the representative images of the groups of images.

In connection with the second aspect, in a first possible implementation of the above second aspect, the selecting module includes:
a first selecting unit configured to, for each of the groups of images, based on light quality parameters of images in the group of images, select from the group of images, each image which has a light quality parameter less than a light threshold, to obtain a first set of images.

In connection with the first possible implementation of the second aspect, in a second possible implementation of the second aspect, the selecting module includes:
a second selecting unit configured to, based on face angles of images in the first set of images, select from the first set of images, each image which has a face angle within a predetermined angle range, to obtain a second set of images.

In connection with the second possible implementation of the second aspect, in a third possible implementation of the above second aspect, the selecting module further includes:
a third selecting unit configured to, based on eye features of images in the second set of images, select from the second set of images, each image which has no closed eyes, to obtain a third set of images.

In connection with the third possible implementation of the second aspect, in a fourth possible implementation of the above second aspect, the selecting module further includes:
a fourth selecting unit configured to, based on face clarities of images in the third set of images, select from the third set of images, each image which has a face clarity larger than or equal to a predetermined clarity, to obtain the representative image of the group of images.

In connection with the first possible implementation of the second aspect, in a fifth possible implementation of the above second aspect, the selecting module further includes:
a transforming unit configured to transform the images in the group of images into gray-scale images;
a first determining unit configured to, for each of the images in the group of images, determine a first number and a second number based on a gray-scale image corresponding to the image, wherein the first number of pixels each having a gray scale less than a first gray-scale threshold and the second number of pixels each having a gray scale larger than a second gray-scale threshold are present in the gray-scale image corresponding to the image;
a second determining unit configured to determine a first ratio of the first number to a total number of pixels in the gray-scale image, and a second ratio of the second number to the total number; and
a third determining unit configured to determine the light quality parameter of the image based on the first ratio and the second ratio.

In connection with the second possible implementation of the second aspect, in a sixth possible implementation of the above second aspect, the selecting module further includes:
a first acquiring unit configured to acquire face feature points of the images in the first sets of images;
a fifth selecting unit configured to, for each of the images in the first sets of images, select from the image a first feature point and a second feature point, wherein the first feature point and the second feature point are feature points symmetrical with respect to a nose in a left-to-right direction;
a fourth determining unit configured to determine a first distance between the first feature point and a predetermined feature point and a second distance between the second feature point and the predetermined feature point; and
a fifth determining unit configured to determine the face angle of the image based on the first distance and the second distance.

In connection with the fourth possible implementation of the second aspect, in a seventh possible implementation of the above second aspect, the selecting module further includes:
a second acquiring unit configured to, for each of the images in the third set of images, acquire a pixel value of each pixel point contained in a face region of the image;
a sixth determining unit configured to, based on the pixel value of each pixel point, determine a cumulative gradient value of the face region; and
a seventh determining unit configured to determine the cumulative gradient value as the face clarity of the image.

In connection with the second aspect, in an eighth possible implementation of the above second aspect, the displaying module includes:
a rotating unit configured to rotate and align the representative images of the groups of images such that face directions of the representative images of the groups of images are the same;
an adjusting unit configured to adjust sizes of the aligned representative images of the groups of images such that the sizes of face regions of the adjusted representative images of the groups of images are the same; and
a displaying unit configured to display the adjusted representative images in a predetermined dynamic manner.

In connection with the eighth possible implementation of the second aspect, in a ninth possible implementation of the above second aspect, when there are more than one representative image for a group of images, one or two representative images are selected randomly for displaying.

According to a third aspect of embodiments of the present disclosure, there is provided a device for displaying images, including:
a processor; and
a memory for storing instructions executable by the processor;
wherein the processor is configured to perform:
when receiving an instruction for opening an album, clustering similar images in the album to obtain a plurality of groups of images;
selecting an image from each of the groups of images as a representative image of the group of images; and
displaying the representative images of the groups of images.

The technical solution according to embodiments of the present disclosure may have the following beneficial effects. When the terminal receives an instruction for opening an album, the terminal clusters similar images in the album to obtain a plurality of groups of images; the terminal selects an image from each of the groups of images as a representative image of the group of images, the representative image having a better image quality; and the terminal displays the representative images of the groups of images which have better image qualities. Thereby, it can improve the display effect of the representative images of the groups of images.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow chart illustrating a method for displaying images according to an exemplary embodiment.
Fig. 2 is a flow chart illustrating another method for displaying images according to an exemplary embodiment.
Fig. 3 is a schematic diagram illustrating distribution of face feature points according to an exemplary embodiment.
Fig. 4 is a block diagram of a device for displaying images according to an exemplary embodiment.
Fig. 5 is a block diagram of a first selecting module according to an exemplary embodiment.
Fig. 6 is a block diagram of a second selecting module according to an exemplary embodiment.
Fig. 7 is a block diagram of a third selecting module according to an exemplary embodiment.
Fig. 8 is a block diagram of a fourth selecting module according to an exemplary embodiment.
Fig. 9 is a block diagram of a fifth selecting module according to an exemplary embodiment.
Fig. 10 is a block diagram of a sixth selecting module according to an exemplary embodiment.
Fig. 11 is a block diagram of a seventh selecting module according to an exemplary embodiment.
Fig. 12 is a block diagram of a displaying module according to an exemplary embodiment.
Fig. 13 is a block diagram of another device for displaying images according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

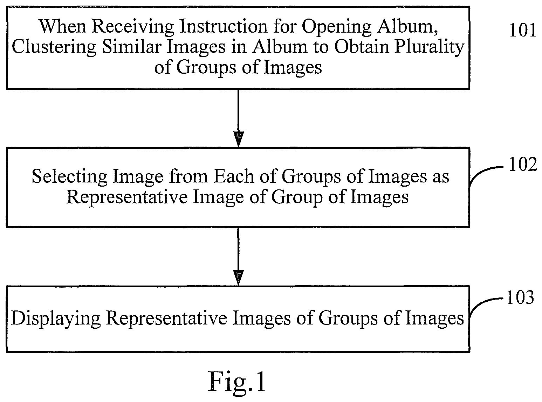

Fig. 1 is a flow chart illustrating a method for displaying images according to an exemplary embodiment. As shown in Fig. 1, the method is implemented by a terminal (or device), and includes the following steps.

In step 101, when an instruction for opening an album is received, similar images in the album are clustered to obtain a plurality of groups of images. By "similar images", it is meant images having at least one identical image feature, such as a same image object for instance.

In step 102, an image is selected from each of the groups of images as a representative image of the group of images.

In step 103, the representative images of the groups of images are displayed.

In the embodiment of the present disclosure, when the terminal receives an instruction for opening an album, the terminal clusters similar images in the album to obtain a plurality of groups of images; the terminal selects an image from each of the groups of images as a representative image of the group of images, the representative image having a better image quality; and the terminal displays the representative images of the groups of images which have better image qualities. Thereby, it can improve the image display effect of the representative images of the groups of images.

In another embodiment of the present disclosure, selecting an image from each of the groups of images as a representative image of the group of images includes:
based on light quality parameters of images in the group of images, selecting from the group of images, each image which has a light quality parameter less than a light threshold, to obtain a first set of images. In a particular example, light quality parameters of images are the light brightness values of these images.

In the embodiment of the present disclosure, based on light quality parameters of images in the group of images, the terminal can select from the group of images, images with better light qualities. Thereby, it can avoid displaying the first set of images as having too dark images or images with excessive light exposure, thus improving the image display effect.

In another embodiment of the present disclosure, the method also includes:
based on face angles of images in the first set of images, selecting from the first set of images, each image which has a face angle within a predetermined angle range, to obtain a second set of images.

In the embodiment of the present disclosure, based on face angles of images in the first set of images, the terminal can select from the first set of images, images with proper face postures. Thereby, it can avoid displaying the second set of images as having less proper face postures. The terminal is thus enabled to display images selected to meet the visual requirements of the user, thus improving the image display effect.

In another embodiment of the present disclosure, the method also includes:
based on eye features of images in the second set of images, selecting from the second set of images, each image which has no closed eyes, to obtain a third set of images.

In the embodiment of the present disclosure, based on eye features of images in the second set of images, the terminal can select, from the second set of images, images with no closed eyes. Thereby, it can avoid displaying the third set of images as having closed eyes, thus improving the display effect of the selected images.

In another embodiment of the present disclosure, the method also includes:
based on face clarities of images in the third set of images, selecting from the third set of images, each image which has a face clarity larger than or equal to a predetermined clarity, to obtain the representative image of the group of images. Face clarities may be the clarity degree of detail shadow stripes and/or its boundary.

The terminal may for example select from the third set of images, based on face clarity values representative of the clarity of the images, each image which has a face clarity value larger than or equal to a predetermined clarity value, to obtain the presentative image of the group of images.

In the embodiment of the present disclosure, based on face clarities of images in the third set of images, the terminal can select from the third set of images, images with better face clarities, thus improving the image clarities of the representative images to be displayed.

In another embodiment of the present disclosure, before selecting from the group of images, based on light quality parameters of images in the group of images, each image which has a light quality parameter less than a light threshold, to obtain a first set of images, the method also includes:
transforming the images in the group of images into gray-scale images;
for each of the images in the group of images, determining a first number of pixels and a second number of pixels based on a gray-scale image corresponding to the image, wherein the first number of pixels each having a gray scale less than a first gray-scale threshold and the second number of pixels each having a gray scale larger than a second gray-scale threshold are present in the gray-scale image corresponding to the image;
determining a first ratio of the first number of pixels to a total number of pixels in the gray-scale image, and a second ratio of the second number of pixels to the total number of pixels; and
determining the light quality parameter of the image based on the first ratio and the second ratio.

In the embodiment of the present disclosure, the terminal can select images with better light quality from the group of images based on light quality parameters by determining the light quality parameters of the images. Thereby, it can avoid displaying the first set of images as having too dark images or images with excessive light exposure, thus improving the image display effect.

In another embodiment of the present disclosure, before selecting from the first set of images, based on face angles of images in the first set of images, each image which has a face angle within a predetermined angle range, to obtain a second set of images, the method also includes:
acquiring face feature points of the images in the first sets of images;
for each of the images in the first sets of images, selecting from the image a first feature point and a second feature point, wherein the first feature point and the second feature point are feature points symmetrical with respect to a nose in a left-to-right direction;
determining a first distance between the first feature point and a predetermined feature point of said image and a second distance between the second feature point and the predetermined feature point; and
determining the face angle of the image based on the first distance and the second distance.

In the embodiment of the present disclosure, the terminal can select images with proper face postures from the first set of images by determining the face angles of the images. Thereby, it can avoid displaying the second set of images as having less proper face postures, but having images selected to meet the visual requirements of the user, thus improving the image display effect.

In another embodiment of the present disclosure, before selecting from the third set of images, based on face clarities of images in the third set of images, each image which has a face clarity larger than or equal to a predetermined clarity, to obtain the representative image of the group of images, the method also includes:
for each of the images in the third set of images, acquiring a pixel value of each pixel point contained in a face region of the image;
based on the pixel value of each pixel point, determining a cumulative gradient value of the face region; and
determining the cumulative gradient value as the face clarity of the image.

In the embodiment of the present disclosure, the terminal can select from the third set of images, images with better face clarities, by determining the face clarities of the images, thus improving the image clarities of the representative images to be displayed.

In another embodiment of the present disclosure, displaying the representative images of the groups of images includes:
rotating and aligning the representative images of the groups of images such that face directions of the representative images of the groups of images are the same;
adjusting sizes of the aligned representative images of the groups of images such that the sizes of face regions of the adjusted representative images of the groups of images are the same; and
displaying the adjusted representative images in a predetermined dynamic manner.

In the embodiment of the present disclosure, the terminal rotates and aligns the representative images of the groups of images and displays the adjusted representative images in a predetermined dynamic manner. Thereby, it can enrich display manners and improve the display effect of the representative images.

In another embodiment of the present disclosure, when there are more than one representative image for a group of images, one or two representative images are selected randomly for displaying.

In the embodiment of the present disclosure, when there are more than one representative image for a group of images, the terminal selects randomly one or two representative images for displaying. Thereby, it can avoid the problem that it seems monotonous to display multiple representative images.

The above optional technical solutions can be combined in any manner to form optional embodiments of the present disclosure, which will not be repeated one by one herein.

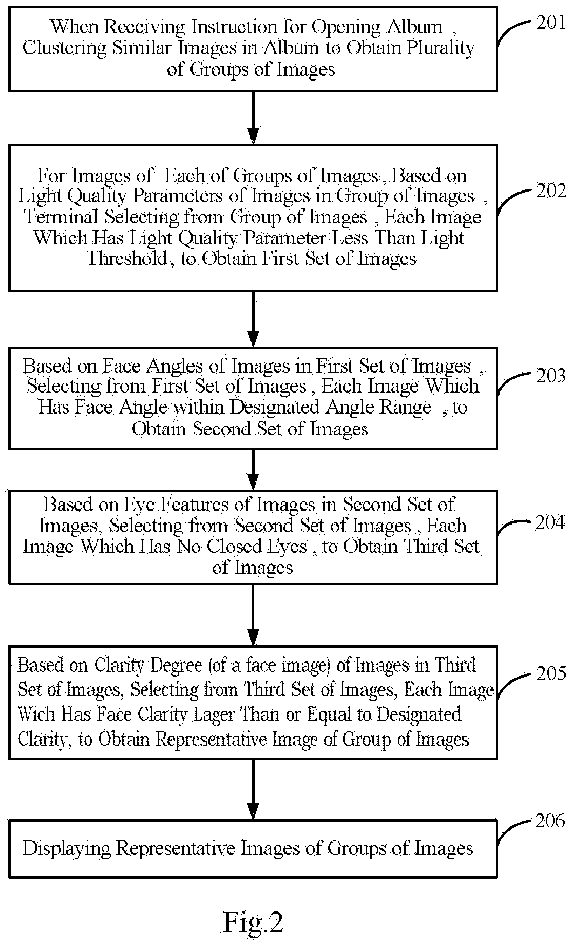

Fig. 2 is a flow chart illustrating a method for displaying images according to an exemplary embodiment. As shown in Fig. 2, the method is applied in a terminal, and includes the following steps.

In step 201, when an instruction for opening an album is received, similar images in the album are clustered to obtain a plurality of groups of images.

When the terminal receives an instruction for opening an album, the terminal clusters all of the images in the album into groups of images. That is, the terminal gathers a plurality of similar or identical images in the album into one group, to obtain a plurality of groups from the album, i.e. the plurality of groups of images.

It should be noted that the instruction for opening the album is configured to open the album, and the instruction for opening the album can be triggered by the user. The user can trigger the instruction by a predetermined operation, such as a click operation, a slide operation, a voice operation, or the like. This is not specifically limited by the embodiment of the present disclosure.

In addition, the terminal clustering all of the images in the album into groups of images can be specifically implemented through technology such as similarity clustering, which will not be described in detail in the embodiment of the present disclosure. Similarity clustering may be any appropriate method to cluster similar images into respective groups of images. As already indicated, similar images are images having at least one identical image feature, such as a same image object for instance.

In step 202, for images in each of the groups of images, based on light quality parameters of the plurality of images in the group of images, the terminal selects from the group of images, each image which has a light quality parameter less than a light threshold, to obtain a first set of images.

Since among the plurality of images included in the group of images, there may be images with darker light or brighter light, that is, among the plurality of images included in the group of images, there may be images being too dark or images with excessive light exposure, in order to select images with better light quality from the group of images, the terminal can, based on light quality parameters of the plurality of images in the group of images, select from the group of images, each image which has a light quality parameter less than the light threshold, to obtain the first set of images.

It should be noted that, the light threshold can be set in advance, and the light threshold is larger than 0 and less than 1. For example, the light threshold can be 0.8, 0.9, and so on. This is not specifically limited by the embodiment of the present disclosure.

For example, the group of images includes 5 images, respectively Image 1, Image 2, Image 3, Image 4 and Image 5. Image 1 has a light quality parameter 0.26; Image 2 has a light quality parameter 0.4; Image 3 has a light quality parameter 0.7; Image 4 has a light quality parameter 0.3; Image 5 has a light quality parameter 0.9; and the light threshold is 0.8. In this case, based on light quality parameters of the plurality of images in the group of images, the terminal selects from the group of images, Image 1, Image 2, Image 3 and Image 4 each of which has a light quality parameter less than the light threshold 0.8, and then the terminal determines that the images in the group of images that satisfy the light quality parameter is Image 1, Image 2, Image 3 and Image 4, to obtain the first set of images.

Further, before the terminal, based on light quality parameters of the plurality of images in the group of images, selects from the group of images, each image which has a light quality parameter less than the light threshold, to obtain the first set of images, the terminal can also determine the light quality parameters of the plurality of images in the group of images. Determining the light quality parameters of the plurality of images in the group of images can include: transforming the images in the group of images into gray-scale images; for each of the images in the group of images, the terminal determining a first number and a second number of pixels based on a gray-scale image corresponding to the image, wherein the first number of pixels each having a gray scale less than a first gray-scale threshold and the second number of pixels each having a gray scale larger than a second gray-scale threshold are present in the gray-scale image corresponding to the image; the terminal determining a first ratio of the first number to a total number of pixels in the gray-scale image, and a second ratio of the second number to the total number; and the terminal determining the light quality parameter of the image based on the first ratio and the second ratio.

Wherein, when the terminal determines the light quality parameter of the image based on the first ratio and the second ratio, the terminal can determine at least one of the first ratio and the second ratio as the light quality parameter of the image. However, the terminal can also select a maximum value of the first ratio and the second ratio, and determine the selected maximum value as the light quality parameter of the image. This is not specifically limited by the embodiment of the present disclosure.

It should be noted that, the first gray-scale threshold and the second gray-scale threshold can be set in advance, and the second gray-scale threshold is larger than the first gray-scale threshold. For example, the first gray-scale threshold can be 30, and the second gray-scale threshold can be 200. This is not specifically limited by the embodiment of the present disclosure.

For example, the first gray-scale threshold is 30, and the second gray-scale threshold is 200. The terminal transforms the images in the group of images into gray-scale images. For Image 1 from the images, the total number of pixels in the gray-scale image of Image 1 is 1000. The terminal, from the gray-scale image corresponding to Image 1, determines that the first number is 150 and the second number is 260, wherein the first number of pixels each having a gray scale less than the first gray-scale threshold 30 and the second number of pixels each having a gray scale larger than the second gray-scale threshold 200. Then, the terminal determines that the first ratio of the first number 150 to the total number 1000 is 0.15, and determines that the second ration of the second number 260 to the total number is 0.26. It is assumed that the terminal determines the maximum value of the first ratio and the second ration as the light quality parameter of the image. Since the first ratio is less than the second ratio, the terminal can determine the second ratio 0.26 as the light quality parameter of Image 1.

In the embodiment of the present disclosure, based on light quality parameters of images in the group of images, the terminal can select from the group of images, images with better light qualities. Thereby, it can avoid displaying the first set of images as having too dark images or images with excess light exposure, thus improving the image display effect.

In step 203, based on face angles of images in the first set of images, each image which has a face angle within a predetermined angle range is selected from the first set of images, to obtain a second set of images.

Since among the images included in the first set of images, there may be images having less proper face postures, and when there are images having less proper face postures, in displaying the images, the display effect of the images will be negatively influenced. Whether a face posture in an image is proper can be determined based on the face angle in the image. Accordingly, in order to select images having proper face postures from the first set of images, the terminal can, based on face angles of images in the first set of images, select each image which has a face angle within a predetermined angle range from the first set of images, to obtain a second set of images.

For example, Image 1 has a face angel of 5 degrees; Image 2 has a face angel of 30 degrees; Image 3 has a face angel of 20 degrees; Image 4 has a face angel of 60 degrees; and the predetermined angle range is 0∼45 degrees. Then, based on the face angles of the images in the first set of images, the terminal selects Image 1, Image 2 and Image 3 each of which has a face angle within the predetermined angle range 0∼45 degrees from the first set of images, to obtain the second set of images.

Further, before the terminal, based on the face angles of the images in the first set of images, selects each image which has a face angle within the predetermined angle range from the first set of images, to obtain the second set of images, the terminal can determine the face angles of the images in the first set of images. Determining the face angles of the images in the first set of images can include: the terminal acquiring face feature points of the images in the first sets of images; for each of the images in the first sets of images, selecting from the image a first feature point and a second feature point, wherein the first feature point and the second feature point are feature points symmetrical with respect to a nose in a left-to-right direction; determining a first distance between the first feature point and a predetermined feature point and a second distance between the second feature point and the predetermined feature point; and determining the face angle of the image based on the first distance and the second distance.

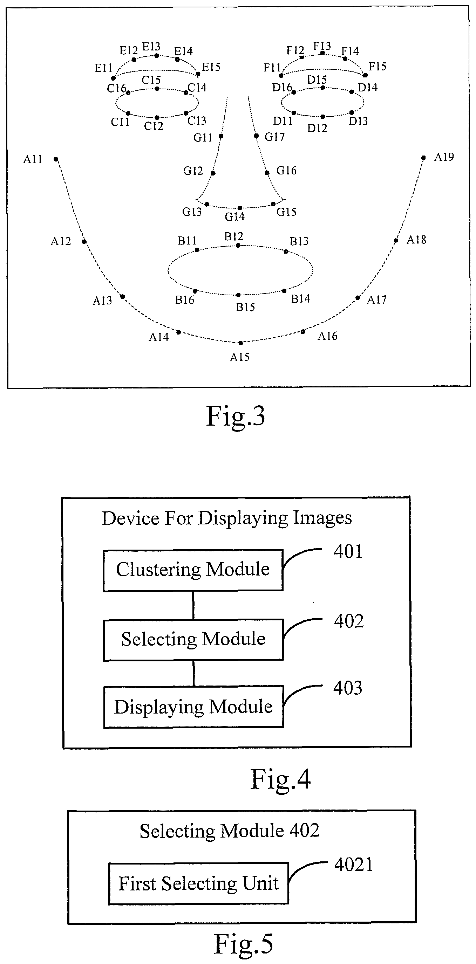

Wherein, the predetermined feature point can be one feature point, or can also be two features points. When the predetermined feature point is one feature point, the predetermined feature point can be located on a central line of the face in the left-to-right direction, that is, on a straight line where the nose is located. For example, as face feature points of an image shown in Fig. 3, the predetermined feature point can be a feature point G14 corresponding to the tip of the nose, or feature points B12 and B15 corresponding to central positions of the lips, or a feature point A15 corresponding to a central position of the chin, and so on. When the predetermined feature point includes two feature points, the two feature points can be feature points symmetrical with respect to the nose in the left-to-right direction. For example, the predetermined feature point can be a feature point C12 corresponding to a central position of a lower half portion of the left eye and a feature point D12 corresponding to a central position of a lower half portion of the right eye, or can be a feature point C15 corresponding to a central position of an upper half portion of the left eye and a feature point D15 corresponding to a central position of an upper half portion of the right eye, and so on. This is not specifically limited by the embodiment of the present disclosure. In addition, since the first feature point and the second feature point are feature points symmetrical with respect to the nose in a left-to-right direction, for easy calculation, the first feature point and the second feature point can be determined as points on the contour of the face. For example, the first feature point is a feature point A11 in Fig. 3, the second feature point is a feature point A19 in Fig. 3. Also, this is not specifically limited by the embodiment of the present disclosure.

When the predetermined feature point is one feature point, the terminal determining the first distance and the second distance can include: the terminal determining a distance between the first feature point and the predetermined feature point as the first distance, and a distance between the second feature point and the predetermined feature point as the second distance.

When the predetermined feature point includes two feature points, for easy description, it is assumed that the first feature point is located at a left side of the nose, and the second feature point is located at a right side of the nose. Then, the terminal determining the first distance and the second distance can include: the terminal determining a distance between the predetermined feature point at the left side of the nose and the first feature point as the first distance, and a distance between the predetermined feature point at the right side of the nose and the second feature point as the second distance.

In addition, when the terminal determines the face angle of the image based on the first distance and the second distance, the terminal can divide the first distance by the second distance, to obtain a third ratio; based on the third ratio, the terminal can acquire a corresponding face angle from stored corresponding relationships between ratios and face angles; and determine the acquired face angle as the face angle of the image.

For example, the predetermined feature point is one feature point, and is the feature point G14 corresponding to the tip of the nose. The terminal acquires face feature points in Image 1 from the first set of images, as shown in Fig. 3; selects the feature point A11 on the contour of the left face as the first feature point, and selects the feature point A19 on the contour of the right face as the second feature point from the face feature points in Image 1. The first feature point A11 and the second feature point A19 are symmetrical with respect to the nose in the left-to-right direction. Then, the terminal determines that the first distance between the first feature point A11 and the predetermined feature point G14 is 36mm, and determines that the second distance between the second feature point A19 and the predetermined feature point G14 is 40mm. Then, the terminal divides the first distance 36mm by the second distance 40mm, to obtain the third ratio being 0.9. Based on the third ratio 0.9, the terminal acquires the corresponding face angle being 5 degrees from the corresponding relationships between ratios and face angles as shown in the following Table 1. The terminal determines the acquired face angle of 5 degrees as the face angle of the image.

**Table 1**

| Ratios | Face Angles |
|---|---|
| 0.9 | 5 degrees |
| 0.8 | 10 degrees |
| 0.7 | 20 degrees |
| ...... | ...... |

It should be noted that, in the embodiment of the present disclosure, the above Table 1 is only an example for illustrating the corresponding relationships between ratios and face angles, and Table 1 does not constitute limitation to the embodiment of the present disclosure.

In addition, when the terminal acquires face features of the images in the first set of images, the terminal can acquire face features of the images through an algorithm of Sparse Deforming Model (SDM). However, in practical application, the terminal can also acquire face features of the images through other algorithms such as Active Shape Model (ASM), Active Appearance Model (AAM) and the like. Acquiring face features of images through the above algorithms can be specifically implemented through technology such as face feature point recognition, which will not be described in detail in the embodiment of the present disclosure.

In the embodiment of the present disclosure, based on face angles of images in the first set of images, the terminal can select from the first set of images, images with proper face postures. Thereby, it can avoid displaying the second set of images as having less proper face postures, but having images selected to meet the visual requirements of the user, thus improving the image display effect.

In step 204, based on eye features of images in the second set of images, each image which has no closed eyes is selected from the second set of images, to obtain a third set of images.

Since the images in the second set of image may have eye features of closed eyes or no closed eyes, and when there are images having closed eyes, in displaying the images, the display effect of the images will be negatively influenced. Accordingly, the terminal can based on the eye features of the images in the second set of images, select from the second set of images, each image which has no closed eyes, to obtain a third set of images.

Based on the eye features of the images in the second set of images, the terminal selecting from the second set of images, each image which has no closed eyes, to obtain a third set of images can include: for each of the images, the terminal acquiring eye feature points of the image; based on all of the eye feature points of the image, determining a classification result through a predetermined classifier. When the classification result is a first value, the terminal determines that the image has closed eyes; and when the classification result is a second value, the terminal determines that the image has no closed eyes.

It should be noted that, the first value and the second value can be set in advance, and the first value can be different from the second value. For example, the first value can be 1, and the second value can be 0, and so on. This is not limited by the embodiment of the present disclosure.

In addition, the terminal determining the image as image having closed eyes or having no closed eyes through the predetermined classifier can be specifically implemented through relevant technology, which will not be described in detail in the embodiment of the present disclosure.

For example, the first value is 1, and the second value is 0. The terminal acquires eye feature points in Image 1, Image 2 and Image 3 in the second set of images, and based on all of the eye features in Image 1, through the predetermined classifier, determines that the classification result of Image 1 is 0. Then, the terminal determines that Image 1 is an image having no closed eyes. Based on all of the eye features in Image 2, through the predetermined classifier, the terminal determines that the classification result of Image 2 is 1. Then, the terminal determines that Image 2 is an image having closed eyes. Based on all of the eye features in Image 3, through the predetermined classifier, the terminal determines that the classification result of Image 3 is 0. Then, the terminal determines that Image 3 is an image having no closed eyes. In this case, the terminal selects Image 1 and Image 3 from the second set of images as the images having no closed eyes, to obtain the third set of images.

In the embodiment of the present disclosure, based on eye features of images in the second set of images, the terminal can select from the second set of images, images with no closed eyes. Thereby, it can avoid displaying the third set of images as having closed eyes, thus improving the display effect of the selected images.

In step 205, based on face clarities of images in the third set of images, each image which has a face clarity larger than or equal to a predetermined clarity is selected from the third set of images, to obtain the representative image of the group of images.

Since among the images in the third set of images, there may be images with fuzzy faces, and when there are images with fuzzy faces, in displaying the images, the display effect of the images will be negatively influenced. Accordingly, in order to select images with clear faces from the third set of images, the terminal can, based on face clarities of images in the third set of images, select from the third set of images, each image which has a face clarity larger than or equal to a predetermined clarity, to obtain the representative image of the group of images.

It should be noted that, the predetermined clarity is configured to determine whether the faces in the images are clear, and the predetermined clarity can be set in advance. For example, the predetermined clarity can be 180, 200, and so on. This is not specifically limited by the embodiment of the present disclosure.

For example, the face clarity of Image 1 is 80, the face clarity of Image 2 is 200, and the predetermined clarity is 180. Then, based on the face clarities of the images in the third set of images, the terminal selects from the third set of images, Image 1 as the image which has a face clarity larger than or equal to the predetermined clarity 180, to obtain Image 1 as the representative image of the group of images.

Further, before the terminal, based on face clarities of images in the third set of images, selects from the third set of images, each image which has a face clarity larger than or equal to a predetermined clarity, to obtain the representative image of the group of images, the terminal can also determine the face clarities of the images in the third set of images. Determining the face clarities of the images in the third set of images can include: for each of the images in the third set of images, acquiring a pixel value of each pixel point contained in a face region of the image; based on the pixel value of each pixel point, determining a cumulative gradient value of the face region; and determining the cumulative gradient value as the face clarity of the image.

Wherein, for each of the images in the third set of images, the terminal acquiring a pixel value of each pixel point contained in a face region of the image can include: for each of the images in the third set of images, the terminal detecting a face in the image; determining the detected face as the face region of the image; and based on the determined face region, the terminal acquiring a pixel value of each pixel point contained in the face region.

It should be noted that, the terminal detecting a face in an image can be specifically implemented through relevant technology such as face detection, which will not be described in detail in the embodiment of the present disclosure.

In addition, based on the pixel value of each pixel point, the terminal determining the cumulative gradient value of the face region can include: the terminal calculating a difference value between each pair of adjacent pixels along a horizontal direction in the face region, to obtain difference values of the pixels along the horizontal direction; determining a sum of the difference values of the pixels along the horizontal direction as a first gradient value; similarly, the terminal calculating a difference value between each pair of adjacent pixels along a vertical direction in the face region, to obtain difference values of the pixels along the vertical direction; determining a sum of the difference values of the pixels along the vertical direction as a second gradient value; and the terminal determining a sum of the first gradient value and the second gradient value as the cumulative gradient value of the face region.

In the embodiment of the present disclosure, the terminal can select from the third set of images, images with better face clarities, by determining the face clarities of the images, thus improving the image clarities of the representative images to be displayed.

Further, when the terminal selects from the images in each group of images, the terminal can select through the above steps 202-205, to obtain the representative image of the group of images. The terminal can also select through the above step 202, or through the above steps 202-203, or through the above steps 202-204, to obtain the representative image of the group of images. However, in practical application, the terminal can also select through any one step of the above steps 202-205, or through any combination of these steps, to obtain the representative image of the group of images. This is not specifically limited by the embodiment of the present disclosure.

In addition, when the terminal selects from the images in each group of images, the terminal can select by the light quality parameters, face angles, eye features and face clarities of the images mentioned in the above steps 202-205. Besides, the terminal can also select according to other parameters, such as resolution, contrast ratio and color saturation of the images. This is not specifically limited by the embodiment of the present disclosure.

In step 206, the representative images of the groups of images are displayed.

The terminal displaying the representative images of the groups of images can include: the terminal rotating and aligning the representative images of the groups of images such that face directions of the representative images of the groups of images are the same; adjusting sizes of the aligned representative images of the groups of images such that the sizes of face regions of the adjusted representative images of the groups of images are the same; and displaying the adjusted representative images in a predetermined dynamic manner.

Wherein, when the terminal rotates and aligns the representative images of the groups of images such that face directions of the representative images of the groups of images are the same, the terminal can rotate the representative images leftward, can also rotate the representative images rightward, or horizontally, or vertically, or with any rotating angles. This is not specifically limited by the embodiment of the embodiment of the present disclosure.

In addition, when the terminal adjusts sizes of the aligned representative images of the groups of images such that the sizes of face regions of the adjusted representative images of the groups of images are the same, the terminal can, based on a predetermined size, zoom in each representative image with a smaller face region among the representative images, and zoom out each representative image with a larger face region among the representative images, to make the sizes of face regions of the adjusted representative images of the groups of images to be the same.

It should be noted that, the predetermined size can be set in advance, and can be set based on the size of the screen of the terminal when the predetermined size is set, or can be set based on any one of the representative images among the representative images. For example, the terminal has a screen size of 4.5 inches, then the predetermined size can be set as 2.5 inches, 3 inches, and so on. This is not specifically limited by the embodiment of the present disclosure.

Moreover, for the terminal displaying the adjusted representative images in a predetermined dynamic manner, the terminal can display the representative images of the groups of images in a predetermined dynamic manner according to storing times of the images, or can also display them in a predetermined dynamic manner randomly. Thereby, a user centric time dynamic album corresponding to the representative images can be created, which is impressive and attractive. The dynamic displaying manner is not specifically limited by the embodiment of the present disclosure. For example, the predetermined dynamic displaying manner can be in the form of slides, or can also be in other forms. This is not specifically limited by the embodiment of the present disclosure.

Further, when there are more than one representative image for a group of images, the terminal can select randomly one or two representative images from the similar representative images for displaying, to prevent all of the similar representative images to be displayed. Thereby, it can avoid the problem that it seems monotonous to display multiple representative images.

Still further, when the terminal receives an instruction for opening an album and opens the album to display images, the terminal can present multiple options of browsing manners for the user to select one as the dynamic displaying manner. When the terminal receives an instruction for displaying dynamic images through one of the multiple browsing manners, the terminal can display the images in the album with the predetermined dynamic manner according to the method of the above steps 201-206. However, the terminal can also set the method for displaying images of the above steps 201-206 as a default displaying manner, and when the album is opened next time, the terminal can automatically display the images with the predetermined dynamic displaying manner, to improve the image displaying effect and make it impressive and attractive. During the terminal displays the images in the album with the predetermined dynamic displaying manner, or after the terminal completes the display of the images in the album, the terminal can quit the mode of displaying representative images of the album upon receiving an instruction for quitting displaying.

Wherein, when the terminal displays the multiple options of browsing manners, the terminal can directly display the multiple options of browsing manners upon receiving the instruction for opening the album, for the user to select from the multiple options of browsing manners. However, the terminal can also present a predetermined button, and when the user clicks the predetermined button, the terminal can display a drop-down menu containing the multiple options of browsing manners, for the user to select therefrom. Thereby, it can avoid the situation when the user does not want to select a browsing manner, it will unnecessarily bother the user by directly displaying the multiple options of browsing manners.

It should be noted that, the instruction for displaying dynamic images is configured to display the images in the album with a dynamic manner, and is triggered by the user. The user can trigger the instruction by clicking a predetermined button. This is not specifically limited by the embodiment of the present disclosure. In addition, the instruction for quitting displaying is configured to quit displaying representative images, and can be triggered by the user through operation such as click, slide, swipe and the like. This is not specifically limited by the embodiment of the present disclosure.

Further, the terminal can select representative images from the album to display according to the method of the above steps 201-206. However, alternatively, before the terminal receives the instruction for opening the album, the terminal can firstly cluster the images in the album, to obtain a plurality of groups of images, and select from the images in each group of images to obtain a representative image of the group of images. Then, when the terminal receives the instruction for opening the album, the terminal can display the representative images of the groups of images. Thereby, it can save time for displaying images and improve the efficiency in displaying images.

In addition, when the terminal displays the representative images of the groups of images, the terminal can display the representative images of the groups of images with a predetermined dynamic displaying manner upon receiving the instruction for opening the album. However, alternatively, before the terminal receives the instruction for opening the album, the terminal can select a dynamic image displaying template from a library of dynamic image displaying templates, and fill the representative images of the groups of images to the dynamic image displaying template to form an album of dynamic images. Then, when the terminal receives the instruction for opening the album, the terminal can directly display the album of dynamic images. Thereby, it can improve the image displaying effect, make it impressive and attractive.

It should be noted that, the library of dynamic image displaying templates can be stored in the terminal in advance, or can also be acquired from a server. This is not specifically limited by the embodiment of the present disclosure.

Further, before the terminal receives the instruction for opening the album, the terminal can cluster the similar images in the album, and select from each group of images. Since the images in the album may be updated at any time, that is, the user may delete or add images from/to the album, in order to timely update the representative images select from the album, the terminal can periodically cluster the similar images and select from each group of images. Thereby, it can achieve update of selected representative images and improve the accuracy in image display.

It should be noted that, the terminal can update the selected representative images of the album with a predetermined period such as 1 week, 2 weeks, 1 month, and so on. However, the terminal can also set to update the album when a predetermined number of images have been updated, such as 10, 20, and so on. This is not specifically limited by the embodiment of the present disclosure.

In the embodiment of the present disclosure, when the terminal receives an instruction for opening an album, the terminal can cluster similar images in the album to obtain a plurality of groups of images. For each of the groups of images, select images from the group of images respectively based on light quality parameters, face angles, eye features and face clarities, to obtain a representative image with better quality from the group of images. Then, the terminal displays the representative images of the groups of images which have better image qualities with a predetermined dynamic displaying manner. Thereby, it can enrich the display manners of the album, and can also improve displaying effect of the representative images to make it impressive and attractive.

Fig. 4 is a block diagram of a device (or terminal) for displaying images according to an exemplary embodiment. As shown in Fig. 4, the device includes a clustering module 401, a selecting module 402 and a displaying module 403.

The clustering module 401 is configured to, when an instruction for opening an album is received, cluster similar images in the album to obtain a plurality of groups of images;
the selecting module 402 is configured to select an image from each of the groups of images as a representative image of the group of images; and
the displaying module 403 is configured to display the representative images of the groups of images.

In another embodiment of the present disclosure, as shown in Fig. 5, the selecting module 402 includes a first selecting unit 4021.

The first selecting unit 4021 is configured to, for each of the groups of images, based on light quality parameters of images in the group of images, select from the group of images, each image which has a light quality parameter less than a light threshold, to obtain a first set of images.

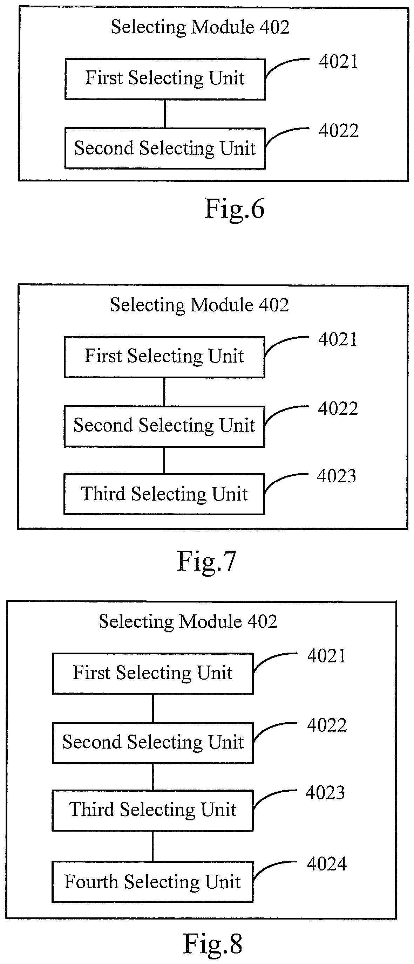

In another embodiment of the present disclosure, as shown in Fig. 6, the selecting module 402 also includes a second selecting unit 4022.

The second selecting unit 4022 is configured to, based on face angles of images in the first set of images, select from the first set of images, each image which has a face angle within a predetermined angle range, to obtain a second set of images.

In another embodiment of the present disclosure, as shown in Fig. 7, the selecting module 402 also includes a third selecting unit 4023.

The third selecting unit 4023 is configured to, based on eye features of images in the second set of images, select from the second set of images, each image which has no closed eyes, to obtain a third set of images.

In another embodiment of the present disclosure, as shown in Fig. 8, the selecting module 402 also includes a fourth selecting unit 4024.

The fourth selecting unit 4024 is configured to, based on face clarities of images in the third set of images, select from the third set of images, each image which has a face clarity larger than or equal to a predetermined clarity, to obtain the representative image of the group of images.

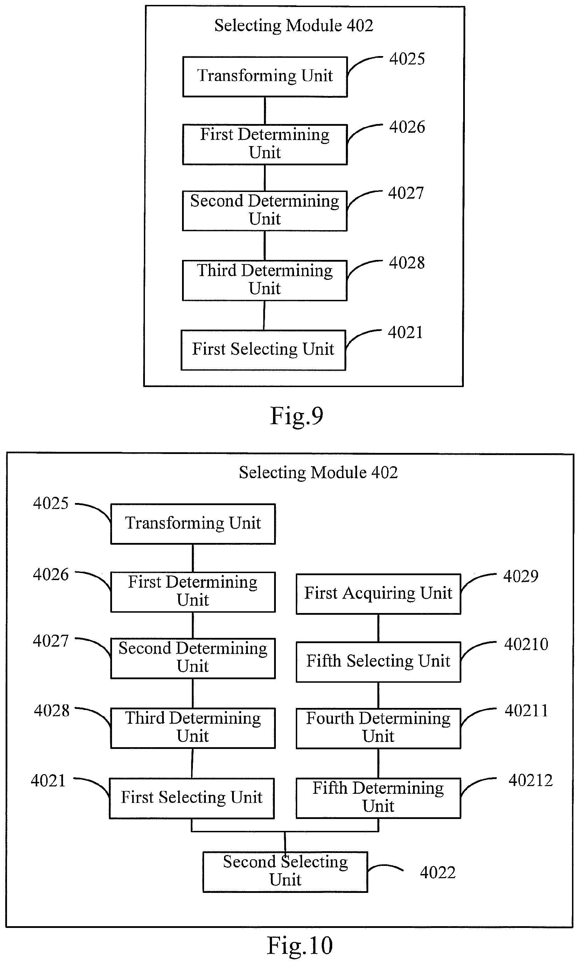

In another embodiment of the present disclosure, as shown in Fig. 9, the selecting module 402 also includes: a transforming unit 4025, a first determining unit 4026, a second determining unit 4027 and a third determining unit 4028.

The transforming unit 4025 is configured to transform the images in the group of images into gray-scale images;
the first determining unit 4026 is configured to, for each of the images in the group of images, determine a first number and a second number based on a gray-scale image corresponding to the image, wherein the first number of pixels each having a gray scale less than a first gray-scale threshold and the second number of pixels each having a gray scale larger than a second gray-scale threshold are present in the gray-scale image corresponding to the image;
the second determining unit 4027 is configured to determine a first ratio of the first number to a total number of pixels in the gray-scale image, and a second ratio of the second number to the total number; and
the third determining unit 4028 is configured to determine the light quality parameter of the image based on the first ratio and the second ratio.

In another embodiment of the present disclosure, as shown in Fig. 10, the selecting module 402 also includes: a first acquiring unit 4029, a fifth selecting unit 40210, a fourth determining unit 40211 and a fifth determining unit 40212.

The first acquiring unit 4029 is configured to acquire face feature points of the images in the first sets of images;
the fifth selecting unit 40210 is configured to, for each of the images in the first sets of images, select from the image a first feature point and a second feature point, wherein the first feature point and the second feature point are feature points symmetrical with respect to a nose in a left-to-right direction;
the fourth determining unit 40211 is configured to determine a first distance between the first feature point and a predetermined feature point and a second distance between the second feature point and the predetermined feature point; and
the fifth determining unit 40212 is configured to determine the face angle of the image based on the first distance and the second distance.

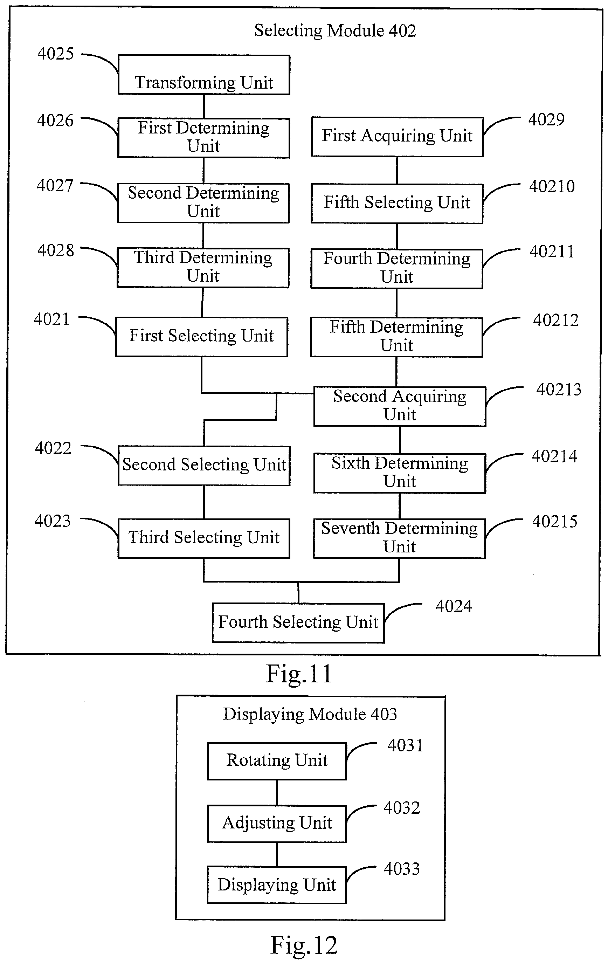

In another embodiment of the present disclosure, as shown in Fig. 11, the selecting module 402 also includes: a second acquiring unit 40213, a sixth determining unit 40214 and a seventh determining unit 40215.

The second acquiring unit 40213 is configured to, for each of the images in the third set of images, acquire a pixel value of each pixel point contained in a face region of the image;
the sixth determining unit 40214 is configured to, based on the pixel value of each pixel point, determine a cumulative gradient value of the face region; and
the seventh determining unit 40215 is configured to determine the cumulative gradient value as the face clarity of the image.

In another embodiment of the present disclosure, as shown in Fig. 12, the displaying module 403 includes: a rotating unit 4031, an adjusting unit 4032 and a displaying unit 4033.

The rotating unit 4031 is configure to rotate and align the representative images of the groups of images such that face directions of the representative images of the groups of images are the same;
the adjusting unit 4032 is configure to adjust sizes of the aligned representative images of the groups of images such that the sizes of face regions of the adjusted representative images of the groups of images are the same; and
the displaying unit 4033 is configure to display the adjusted representative images in a predetermined dynamic manner.

In another embodiment of the present disclosure, when there are more than one representative image for a group of images, one or two representative images are selected randomly for displaying.

In the embodiment of the present disclosure, when the terminal receives an instruction for opening an album, the terminal clusters similar images in the album to obtain a plurality of groups of images; the terminal selects an image from each of the groups of images as a representative image of the group of images, the representative image having a better image quality; and the terminal displays the representative images of the groups of images which have better image qualities. Thereby, it can improve the image display effect of the representative images of the groups of images.

With respect to the devices in the above embodiments, the specific manners for performing operations for individual modules therein have been described in detail in the embodiments regarding the related methods, which will not be elaborated herein.

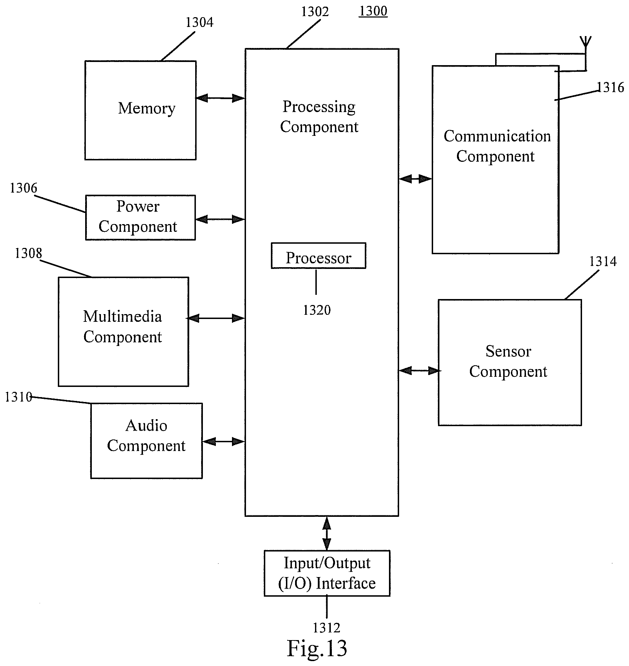

Fig. 13 is a block diagram of a device 1300 for displaying images according to an exemplary embodiment. For example, the device 1300 may be a mobile phone, a computer, a digital broadcast terminal, a messaging device, a gaming console, a tablet, a medical device, exercise equipment, a personal digital assistant, and the like.

Referring to Fig. 13, the device 1300 may include one or more of the following components: a processing component 1302, a memory 1304, a power component 1306, a multimedia component 1308, an audio component 1310, an input/output (I/O) interface 1312, a sensor component 1314, and a communication component 1316.

The processing component 1302 typically controls overall operations of the device 1300, such as the operations associated with display, telephone calls, data communications, camera operations, and recording operations. The processing component 1302 may include one or more processors 1320 to execute instructions to perform all or part of the steps in the above described methods. Moreover, the processing component 1302 may include one or more modules which facilitate the interaction between the processing component 1302 and other components. For instance, the processing component 1302 may include a multimedia module to facilitate the interaction between the multimedia component 1308 and the processing component 1302.

The memory 1304 is configured to store various types of data to support the operation of the device 1300. Examples of such data include instructions for any applications or methods operated on the device 1300, contact data, phonebook data, messages, pictures, video, etc. The memory 1304 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1306 provides power to various components of the device 1300. The power component 1306 may include a power management system, one or more power sources, and any other components associated with the generation, management, and distribution of power in the device 1300.

The multimedia component 1308 includes a screen providing an output interface between the device 1300 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1308 includes a front camera and/or a rear camera. The front camera and the rear camera may receive an external multimedia datum while the device 1300 is in an operation mode, such as a photographing mode or a video mode. Each of the front camera and the rear camera may be a fixed optical lens system or have focus and optical zoom capability.

The audio component 1310 is configured to output and/or input audio signals. For example, the audio component 1310 includes a microphone ("MIC") configured to receive an external audio signal when the device 1300 is in an operation mode, such as a call mode, a recording mode, and a voice recognition mode. The received audio signal may be further stored in the memory 1304 or transmitted via the communication component 1316. In some embodiments, the audio component 1310 further includes a speaker to output audio signals.

The I/O interface 1312 provides an interface between the processing component 1302 and peripheral interface modules, such as a keyboard, a click wheel, buttons, and the like. The buttons may include, but are not limited to, a home button, a volume button, a starting button, and a locking button.

The sensor component 1314 includes one or more sensors to provide status assessments of various aspects of the device 1300. For instance, the sensor component 1314 may detect an open/closed status of the device 1300, relative positioning of components, e.g., the display and the keypad, of the device 1300, a change in position of the device 1300 or a component of the device 1300, a presence or absence of user contact with the device 1300, an orientation or an acceleration/deceleration of the device 1300, and a change in temperature of the device 1300. The sensor component 1314 may include a proximity sensor configured to detect the presence of nearby objects without any physical contact. The sensor component 1314 may also include a light sensor, such as a CMOS or CCD image sensor, for use in imaging applications. In some embodiments, the sensor component 1314 may also include an accelerometer sensor, a gyroscope sensor, a magnetic sensor, a pressure sensor, or a temperature sensor.

The communication component 1316 is configured to facilitate communication, wired or wirelessly, between the device 1300 and other devices. The device 1300 can access a wireless network based on a communication standard, such as WiFi, 2G, or 3G, or a combination thereof. In one exemplary embodiment, the communication component 1316 receives a broadcast signal or broadcast associated information from an external broadcast management system via a broadcast channel. In one exemplary embodiment, the communication component 1316 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 1300 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 1304, executable by the processor 1320 in the device 1300, for performing the above-described methods. For example, the non-transitory computer-readable storage medium may be a ROM, a RAM, a CD-ROM, a magnetic tape, a floppy disc, an optical data storage device, and the like.

A non-transitory computer readable storage medium, when instructions in the storage medium is executed by the processor of a mobile terminal, the mobile terminal is caused to perform the method for displaying images. The method includes:
when receiving an instruction for opening an album, clustering similar images in the album to obtain a plurality of groups of images;
selecting an image from each of the groups of images as a representative image of the group of images; and
displaying the representative images of the groups of images.

In another embodiment of the present disclosure, selecting an image from each of the groups of images as a representative image of the group of images includes:
based on light quality parameters of images in the group of images, selecting from the group of images, each image which has a light quality parameter less than a light threshold, to obtain a first set of images.

In another embodiment of the present disclosure, the method further includes:
based on face angles of images in the first set of images, selecting from the first set of images, each image which has a face angle within a predetermined angle range, to obtain a second set of images.

In another embodiment of the present disclosure, the method further includes:
based on eye features of images in the second set of images, selecting from the second set of images, each image which has no closed eyes, to obtain a third set of images.

In another embodiment of the present disclosure, the method further includes:
based on face clarities of images in the third set of images, selecting from the third set of images, each image which has a face clarity larger than or equal to a predetermined clarity, to obtain the representative image of the group of images.

In another embodiment of the present disclosure, before based on light quality parameters of images in the group of images, selecting from the group of images, each image which has a light quality parameter less than a light threshold, to obtain a first set of images, the method further includes:
transforming the images in the group of images into gray-scale images;
for each of the images in the group of images, determining a first number and a second number based on a gray-scale image corresponding to the image, wherein the first number of pixels each having a gray scale less than a first gray-scale threshold and the second number of pixels each having a gray scale larger than a second gray-scale threshold are present in the gray-scale image corresponding to the image;
determining a first ratio of the first number to a total number of pixels in the gray-scale image, and a second ratio of the second number to the total number; and
determining the light quality parameter of the image based on the first ratio and the second ratio.

In another embodiment of the present disclosure, before based on face angles of images in the first set of images, selecting from the first set of images, each image which has a face angle within a predetermined angle range, to obtain a second set of images, the method further includes:
acquiring face feature points of the images in the first sets of images;
for each of the images in the first sets of images, selecting from the image a first feature point and a second feature point, wherein the first feature point and the second feature point are feature points symmetrical with respect to a nose in a left-to-right direction;
determining a first distance between the first feature point and a predetermined feature point and a second distance between the second feature point and the predetermined feature point; and
determining the face angle of the image based on the first distance and the second distance.

In another embodiment of the present disclosure, before based on face clarities of images in the third set of images, selecting from the third set of images, each image which has a face clarity larger than or equal to a predetermined clarity, to obtain the representative image of the group of images, the method further includes:
for each of the images in the third set of images, acquiring a pixel value of each pixel point contained in a face region of the image;
based on the pixel value of each pixel point, determining a cumulative gradient value of the face region; and
determining the cumulative gradient value as the face clarity of the image.

In another embodiment of the present disclosure, displaying the representative images of the groups of images includes:
rotating and aligning the representative images of the groups of images such that face directions of the representative images of the groups of images are the same;
adjusting sizes of the aligned representative images of the groups of images such that the sizes of face regions of the adjusted representative images of the groups of images are the same; and
displaying the adjusted representative images in a predetermined dynamic manner.

In another embodiment of the present disclosure, when there are more than one representative image for a group of images, selecting randomly one or two representative images for displaying.

It will be appreciated that the present invention is not limited to the exact construction that has been described above and illustrated in the accompanying drawings, and that various modifications and changes can be made without departing from the scope thereof. It is intended that the scope of the invention only be limited by the appended claims.

## Claims

1. A method implemented by a device for displaying images, **characterized in that** the method comprises:
when receiving an instruction for opening an album, clustering (101, 201) similar images in the album to obtain a plurality of groups of images;
selecting (102; 202), from each group of images, an image as a representative image of said group of images; and
displaying (103, 206) the representative images of the groups of images;
wherein said selecting (102; 202) of an image from each of the groups of images as a representative image of the group of images comprises:
based on light brightness values of images in the group of images, selecting (202) from the group of images, each image which has a light brightness value less than a light brightness threshold, to obtain a first set of images; and
wherein before said selecting (202) from the group of images, based on light brightness values of images in the group of images, of each image which has a light brightness value less than a light brightness threshold, to obtain a first set of images, the method further comprises:
transforming the images in the group of images into gray-scale images;
for each of the images in the group of images, determining a first number and a second number of pixels based on a gray-scale image corresponding to the image, wherein the first number of pixels each having a gray scale less than a first gray-scale threshold and the second number of pixels each having a gray scale larger than a second gray-scale threshold are present in the gray-scale image corresponding to the image;
determining a first ratio of the first number to a total number of pixels in the gray-scale image, and a second ratio of the second number to the total number of pixels; and
determining the light brightness value of the image based on the first ratio and the second ratio, wherein the light brightness value is a maximum value selected among the first ratio and the second ratio.

2. The method of claim 1, wherein images in the first set of images comprise a face, said method further comprising:
based on face angles of images in the first set of images, selecting (203) from the first set of images, each image which has a face angle within a predetermined angle range, to obtain a second set of images.

3. The method of claim 2, wherein the method further comprises:
based on eye features of images in the second set of images, selecting (204) from the second set of images, each image comprising a face with no closed eyes, to obtain a third set of images.

4. The method of claim 3, wherein the method further comprises:
based on clarity degrees representative of clarity of images in the third set of images, selecting (205) from the third set of images, each image which has a clarity degree larger than or equal to a predetermined clarity, to obtain the representative image of the group of images.

5. The method of claim 2, wherein before said selecting (203) from the first set of images, based on face angles of images in the first set of images, of each image which has a face angle within a predetermined angle range, to obtain a second set of images, the method further comprises:
acquiring face feature points of the images in the first set of images;
for each of the images in the first set of images, selecting from the image a first feature point and a second feature point, wherein the first feature point and the second feature point are feature points symmetrical with respect to a nose in a left-to-right direction;
determining a first distance between the first feature point and a predetermined feature point and a second distance between the second feature point and the predetermined feature point; and
determining the face angle of the image based on the first distance and the second distance.

6. The method of claim 4, wherein before said selecting (205) from the third set of images, based on face clarities of images in the third set of images, of each image which has a face clarity larger than or equal to a predetermined clarity, to obtain the representative image of the group of images, the method further comprises:
for each of the images in the third set of images, acquiring a pixel value of each pixel point contained in a face region of the image;
based on the pixel value of each pixel point, determining a cumulative gradient value of the face region; and
determining the cumulative gradient value as the face clarity of the image.

7. The method of claim 1, wherein said displaying (103, 206) of the representative images of the groups of images comprises:
rotating and aligning the representative images of the groups of images such that face directions of the representative images of the groups of images are the same;
adjusting sizes of the aligned representative images of the groups of images such that the sizes of face regions of the adjusted representative images of the groups of images are the same; and
displaying the adjusted representative images in a predetermined dynamic manner.

8. The method of claim 7, wherein when there are more than one representative image for a group of images, selecting randomly one or two representative images for displaying.

9. A device for displaying images, **characterized in that** the device comprises:
a clustering module (401) configured to, when an instruction for opening an album is received, cluster similar images in the album to obtain a plurality of groups of images;
a selecting module (402) configured to select, from each group of images, an image as a representative image of said group of images; and
a displaying module (403) configured to display the representative images of the groups of images;
wherein the selecting module (402) comprises:
a first selecting unit (4021) configured to, for each of the groups of images, based on light brightness values of images in the group of images, select from the group of images, each image which has a light brightness value less than a light brightness threshold, to obtain a first set of images; and
wherein the selecting module further includes:
a transforming unit configured to transform the images in the group of images into gray-scale images;
a first determining unit configured to, for each of the images in the group of images, determine a first number and a second number of pixels based on a gray-scale image corresponding to the image, wherein the first number of pixels each having a gray scale less than a first gray-scale threshold and the second number of pixels each having a gray scale larger than a second gray-scale threshold are present in the gray-scale image corresponding to the image;
a second determining unit configured to determine a first ratio of the first number to a total number of pixels in the gray-scale image, and a second ratio of the second number to the total number; and
a third determining unit configured to determine the light quality parameter of the image based on the first ratio and the second ratio wherein the light brightness value is a maximum value selected among the first ratio and the second ratio.

10. The device of claim 9, wherein images in the first set of images comprise a face, the selecting module (402) further comprising:
a second selecting unit (4022) configured to, based on face angles of images in the first set of images, select from the first set of images, each image which has a face angle within a predetermined angle range, to obtain a second set of images.

11. The device of claim 10, wherein the selecting module (402) further comprises:
a third selecting unit (4023) configured to, based on eye features of images in the second set of images, select from the second set of images, each image comprising a face with no closed eyes, to obtain a third set of images.

12. The device of claim 11, wherein the selecting module (402) further comprises:
a fourth selecting unit (4024) configured to, based on clarity degrees representative of clarity of images in the third set of images, select from the third set of images, each image which has a face clarity larger than or equal to a predetermined clarity, to obtain the representative image of the group of images.

## Patentansprüche

1. Verfahren, das durch eine Vorrichtung zum Anzeigen von Bildern umgesetzt wird, **dadurch gekennzeichnet, dass** das Verfahren umfasst:
wenn eine Anweisung zum Öffnen eines Albums empfangen wird, Gruppieren (101, 201) ähnlicher Bilder in dem Album, um mehrere Gruppen von Bildern zu erhalten,
Auswählen (102; 202), aus jeder Gruppe von Bildern, eines Bilds als ein repräsentatives Bild der Gruppe von Bildern und
Anzeigen (103, 206) der repräsentativen Bilder der Gruppen von Bildern,
wobei das Auswählen (102; 202) eines Bilds aus jeder der Gruppen von Bildern als ein repräsentatives Bild der Gruppe von Bildern umfasst:
auf Grundlage von Lichthelligkeitswerten von Bildern in der Gruppe von Bildern, Auswählen (202), aus der Gruppe von Bildern, jedes Bilds, welches einen Lichthelligkeitswert aufweist, der kleiner ist als ein Lichthelligkeitsschwellenwert, um einen ersten Satz von Bildern zu erhalten, wobei das repräsentative Bild aus dem ersten Satz von Bildern ausgewählt ist, und
wobei das Verfahren vor dem Auswählen (202) aus der Gruppe von Bildern, auf Grundlage von Lichthelligkeitswerten von Bildern in der Gruppe von Bildern, von jedem Bild, welches einen Lichthelligkeitswert aufweist, der kleiner ist als ein Lichthelligkeitsschwellenwert, um einen ersten Satz von Bildern zu erhalten, ferner umfasst:
Umwandeln der Bilder in der Gruppe von Bildern in Graustufenbilder,
für jedes der Bilder in der Gruppe von Bildern, Bestimmen einer ersten Anzahl und einer zweiten Anzahl von Pixeln auf Grundlage eines Graustufenbilds, das dem Bild entspricht, wobei die erste Anzahl von Pixeln, die jeweils eine Graustufe aufweisen, die kleiner ist als ein erster Graustufenschwellenwert, und die zweite Anzahl von Pixeln, die jeweils eine Graustufe aufweisen, die größer ist als ein zweiter Graustufenschwellenwert, in dem Graustufenbild vorliegen, das dem Bild entspricht,
Bestimmen eines ersten Verhältnisses der ersten Anzahl zu einer Gesamtanzahl von Pixeln in dem Graustufenbild und eines zweiten Verhältnisses der zweiten Anzahl zu der Gesamtanzahl von Pixeln, und
Bestimmen des Lichthelligkeitswerts des Bilds auf Grundlage des ersten Verhältnisses und des zweiten Verhältnisses, wobei der Lichthelligkeitswert ein Maximalwert ist, der aus dem ersten Verhältnis und dem zweiten Verhältnis ausgewählt ist.

2. Verfahren nach Anspruch 1, wobei Bilder in dem ersten Satz von Bildern ein Gesicht umfassen und das Verfahren ferner umfasst:
auf Grundlage von Gesichtswinkeln von Bildern in dem ersten Satz von Bildern, Auswählen (203), aus dem ersten Satz von Bildern, jedes Bilds, welches einen Gesichtswinkel innerhalb eines vorbestimmten Winkelbereichs aufweist, um einen zweiten Satz von Bildern zu erhalten.

3. Verfahren nach Anspruch 2, wobei das Verfahren ferner umfasst:
auf Grundlage von Augenmerkmalen von Bildern in dem zweiten Satz von Bildern, Auswählen (204), aus dem zweiten Satz von Bildern, jedes Bilds, das ein Gesicht ohne geschlossene Augen umfasst, um einen dritten Satz von Bildern zu erhalten.

4. Verfahren nach Anspruch 3, wobei das Verfahren ferner umfasst:
auf Grundlage von Deutlichkeitsgraden, die für die Deutlichkeit von Bildern in dem dritten Satz von Bildern repräsentativ sind, Auswählen (205), aus dem dritten Satz von Bildern, jedes Bilds, welches einen Deutlichkeitsgrad aufweist, der größer gleich einer vorbestimmten Deutlichkeit ist, um das repräsentative Bild der Gruppe von Bildern zu erhalten.

5. Verfahren nach Anspruch 2, wobei vor dem Auswählen (203) aus dem ersten Satz von Bildern, auf Grundlage von Gesichtswinkeln von Bildern in dem ersten Satz von Bildern, von jedem Bild, welches einen Gesichtswinkel innerhalb eines vorbestimmten Winkelbereichs aufweist, um einen zweiten Satz von Bildern zu erhalten, das Verfahren ferner umfasst:
Erfassen von Gesichtsmerkmalspunkten der Bilder in dem ersten Satz von Bildern,
für jedes der Bilder in dem ersten Satz von Bildern, Auswählen eines ersten Merkmalspunkts und eines zweiten Merkmalspunkts aus dem Bild, wobei der erste Merkmalspunkt und der zweite Merkmalspunkt Merkmalspunkte sind, die in Bezug auf eine Nase in einer Richtung von links nach rechts symmetrisch sind,
Bestimmen eines ersten Abstands zwischen dem ersten Merkmalspunkt und einem vorbestimmten Merkmalspunkt und eines zweiten Abstands zwischen dem zweiten Merkmalspunkt und dem vorbestimmten Merkmalspunkt, und
Bestimmen des Gesichtswinkels des Bilds auf Grundlage des ersten Abstands und des zweiten Abstands.

6. Verfahren nach Anspruch 4, wobei vor dem Auswählen (205) aus dem dritten Satz von Bildern, auf Grundlage von Gesichtsdeutlichkeiten von Bildern in dem dritten Satz von Bildern, von jedem Bild, welches eine Gesichtsdeutlichkeit aufweist, die größer gleich einer vorbestimmten Deutlichkeit ist, um das repräsentative Bild der Gruppe von Bildern zu erhalten, das Verfahren ferner umfasst:
für jedes der Bilder in dem dritten Satz von Bildern, Erfassen eines Pixelwerts von jedem Pixelpunkt, der in einer Gesichtsregion des Bilds enthalten ist,
auf Grundlage des Pixelwerts von jedem Pixelpunkt, Bestimmen eines kumulierten Gradientenwerts der Gesichtsregion und
Bestimmen des kumulierten Gradientenwerts als die Gesichtsdeutlichkeit des Bilds.

7. Verfahren nach Anspruch 1, wobei das Anzeigen (103, 206) der repräsentativen Bilder der Gruppen von Bildern umfasst:
Drehen und Ausrichten der repräsentativen Bilder der Gruppen von Bildern, sodass Gesichtsrichtungen der repräsentativen Bilder der Gruppen von Bildern gleich sind,
Anpassen von Größen der ausgerichteten repräsentativen Bilder der Gruppen von Bildern, sodass die Größen von Gesichtsregionen der angepassten repräsentativen Bilder der Gruppen von Bildern gleich sind, und
Anzeigen der angepassten repräsentativen Bilder auf eine vorbestimmte dynamische Weise.

8. Verfahren nach Anspruch 7, wobei, wenn es mehr als ein repräsentatives Bild für eine Gruppe von Bildern gibt, ein oder zwei repräsentative Bilder zufällig zum Anzeigen ausgewählt werden.

9. Vorrichtung zum Anzeigen von Bildern, **dadurch gekennzeichnet, dass** die Vorrichtung umfasst:
ein Gruppierungsmodul (401), das dazu ausgestaltet ist, wenn eine Anweisung zum Öffnen eines Albums empfangen wird, ähnliche Bilder in dem Album zu gruppieren, um mehrere Gruppen von Bildern zu erhalten,
ein Auswahlmodul (402), das dazu ausgestaltet ist, aus jeder Gruppe von Bildern ein Bild als ein repräsentatives Bild der Gruppe von Bildern auszuwählen, und
ein Anzeigemodul (403), das dazu ausgestaltet ist, die repräsentativen Bilder der Gruppen von Bildern anzuzeigen,
wobei das Auswahlmodul (402) umfasst:
eine erste Auswahleinheit (4021), die dazu ausgestaltet ist, für jede der Gruppen von Bildern, auf Grundlage von Lichthelligkeitswerten von Bildern in der Gruppe von Bildern, aus der Gruppe von Bildern jedes Bild auszuwählen, welches einen Lichthelligkeitswert aufweist, der kleiner ist als ein Lichthelligkeitsschwellenwert, um einen ersten Satz von Bildern zu erhalten, wobei das Auswahlmodul (402) dazu ausgestaltet ist, das repräsentative Bild aus dem ersten Satz von Bildern auszuwählen, und
wobei das Auswahlmodul ferner beinhaltet:
eine Umwandlungseinheit, die dazu ausgestaltet ist, die Bilder in der Gruppe von Bildern in Graustufenbilder umzuwandeln,
eine erste Bestimmungseinheit, die dazu ausgestaltet ist, für jedes der Bilder in der Gruppe von Bildern eine erste Anzahl und eine zweite Anzahl von Pixeln auf Grundlage eines Graustufenbilds zu bestimmen, das dem Bild entspricht, wobei die erste Anzahl von Pixeln, die jeweils eine Graustufe aufweisen, die kleiner ist als ein erster Graustufenschwellenwert, und die zweite Anzahl von Pixeln, die jeweils eine Graustufe aufweisen, die größer ist als ein zweiter Graustufenschwellenwert, in dem Graustufenbild vorliegen, das dem Bild entspricht,
eine zweite Bestimmungseinheit, die dazu ausgestaltet ist, ein erstes Verhältnis der ersten Anzahl zu einer Gesamtanzahl von Pixeln in dem Graustufenbild und ein zweites Verhältnis der zweiten Anzahl zu der Gesamtanzahl zu bestimmen, und
eine dritte Bestimmungseinheit, die dazu ausgestaltet ist, den Lichtqualitätsparameter des Bilds auf Grundlage des ersten Verhältnisses und des zweiten Verhältnisses zu bestimmen, wobei der Lichthelligkeitswert ein Maximalwert ist, der aus dem ersten Verhältnis und dem zweiten Verhältnis ausgewählt ist.

10. Vorrichtung nach Anspruch 9, wobei Bilder in dem ersten Satz von Bildern ein Gesicht umfassen und das Auswahlmodul (402) ferner umfasst:
eine zweite Auswahleinheit (4022), die dazu ausgestaltet ist, auf Grundlage von Gesichtswinkeln von Bildern in dem ersten Satz von Bildern, aus dem ersten Satz von Bildern jedes Bild auszuwählen, das einen Gesichtswinkel innerhalb eines vorbestimmten Winkelbereichs aufweist, um einen zweiten Satz von Bildern zu erhalten.

11. Vorrichtung nach Anspruch 10, wobei das Auswahlmodul (402) ferner umfasst:
eine dritte Auswahleinheit (4023), die dazu ausgestaltet ist, auf Grundlage von Augenmerkmalen von Bildern in dem zweiten Satz von Bildern, aus dem zweiten Satz von Bildern jedes Bild auszuwählen, das ein Gesicht ohne geschlossene Augen umfasst, um einen dritten Satz von Bildern zu erhalten.

12. Vorrichtung nach Anspruch 11, wobei das Auswahlmodul (402) ferner umfasst:
eine vierte Auswahleinheit (4024), die dazu ausgestaltet ist, auf Grundlage von Deutlichkeitsgraden, die für die Deutlichkeit von Bildern in dem dritten Satz von Bildern repräsentativ sind, aus dem dritten Satz von Bildern jedes Bild auszuwählen, welches eine Gesichtsdeutlichkeit aufweist, die größer gleich einer vorbestimmten Deutlichkeit ist, um das repräsentative Bild der Gruppe von Bildern zu erhalten.

## Revendications

1. Procédé mis en oeuvre par un dispositif permettant d'afficher des images, **caractérisé en ce que** le procédé comprend les étapes suivantes :
lors de la réception d'une instruction d'ouverture d'un album, regrouper (101, 201) des images similaires de l'album pour obtenir une pluralité de groupes d'images ;
sélectionner (102 ; 202), dans chaque groupe d'images, une image en tant qu'image représentative dudit groupe d'images ; et
afficher (103, 206) les images représentatives des groupes d'images ;
dans lequel ladite sélection (102 ; 202) d'une image dans chacun des groupes d'images, en tant qu'image représentative du groupe d'images, comprend :
sur la base de valeurs d'intensité lumineuse d'images du groupe d'images, sélectionner (202) dans le groupe d'images, chaque image qui présente une valeur d'intensité lumineuse inférieure à un seuil d'intensité lumineuse, pour obtenir un premier ensemble d'images, ladite image représentative étant sélectionnée dans ledit premier ensemble d'images ; et
dans lequel, avant ladite sélection (202), dans le groupe d'images, sur la base de valeurs d'intensité lumineuse d'images du groupe d'images, de chaque image qui présente une valeur d'intensité lumineuse inférieure à un seuil d'intensité lumineuse, pour obtenir un premier ensemble d'images, le procédé comprend en outre les étapes suivantes :
transformer les images du groupe d'images en images en niveaux de gris ;
pour chacune des images du groupe d'images, déterminer un premier nombre et un second nombre de pixels sur la base d'une image en niveaux de gris correspondant à l'image, dans lequel le premier nombre de pixels ayant chacun un niveau de gris inférieur à un premier seuil de niveau de gris et le second nombre de pixels ayant chacun un niveau de gris supérieur à un second seuil de niveau de gris sont présents sur l'image en niveaux de gris correspondant à l'image ;
déterminer un premier rapport du premier nombre à un nombre total de pixels de l'image en niveaux de gris, et un second rapport du second nombre au nombre total de pixels ; et
déterminer la valeur d'intensité lumineuse de l'image sur la base du premier rapport et du second rapport, dans lequel la valeur d'intensité lumineuse est une valeur maximale sélectionnée entre le premier rapport et le second rapport.

2. Procédé selon la revendication 1, dans lequel des images du premier ensemble d'images comprennent un visage, ledit procédé comprenant en outre l'étape suivante :
sur la base d'angles de visages d'images du premier ensemble d'images, sélectionner (203) dans le premier ensemble d'images, chaque image qui présente un angle de visage compris dans une plage angulaire prédéterminée, pour obtenir un deuxième ensemble d'images.

3. Procédé selon la revendication 2, dans lequel le procédé comprend en outre l'étape suivante :
sur la base de caractéristiques d'yeux d'images du deuxième ensemble d'images, sélectionner (204) dans le deuxième ensemble d'images, chaque image comprenant un visage sans yeux fermés, pour obtenir un troisième ensemble d'images.

4. Procédé selon la revendication 3, dans lequel le procédé comprend en outre l'étape suivante :
sur la base de degrés de clarté représentatifs de la clarté d'images du troisième ensemble d'images, sélectionner (205) dans le troisième ensemble d'images, chaque image qui présente un degré de clarté supérieur ou égal à une clarté prédéterminée, pour obtenir l'image représentative du groupe d'images.

5. Procédé selon la revendication 2, dans lequel, avant ladite sélection (203), dans le premier ensemble d'images, sur la base d'angles de visages d'images du premier ensemble d'images, de chaque image qui présente un angle de visage compris dans une plage angulaire prédéterminée, pour obtenir un deuxième ensemble d'images, le procédé comprend en outre les étapes suivantes :
acquérir des points caractéristiques de visages des images du premier ensemble d'images ;
pour chacune des images du premier ensemble d'images, sélectionner sur l'image un premier point caractéristique et un second point caractéristique, dans lequel le premier point caractéristique et le second point caractéristique sont des points caractéristiques symétriques par rapport à un nez dans un sens de gauche à droite ;
déterminer une première distance entre le premier point caractéristique et un point caractéristique prédéterminé, et une seconde distance entre le second point caractéristique et le point caractéristique prédéterminé ; et
déterminer l'angle de visage de l'image sur la base de la première distance et de la seconde distance.

6. Procédé selon la revendication 4, dans lequel, avant ladite sélection (205), dans le troisième ensemble d'images, sur la base de clartés de visages d'images du troisième ensemble d'images, de chaque image qui présente une clarté de visage supérieure ou égale à une clarté prédéterminée, pour obtenir l'image représentative du groupe d'images, le procédé comprend en outre les étapes suivantes :
pour chacune des images du troisième ensemble d'images, acquérir une valeur de pixel de chaque point de pixel contenu dans une région de visage de l'image ;
sur la base de la valeur de pixel de chaque point de pixel, déterminer une valeur de gradient cumulé de la région de visage ; et
déterminer la valeur de gradient cumulé en tant que clarté de visage de l'image.

7. Procédé selon la revendication 1, dans lequel ledit affichage (103, 206) des images représentatives des groupes d'images comprend les étapes suivantes :
faire tourner et aligner les images représentatives des groupes d'images, de manière que les orientations de visages des images représentatives des groupes d'images soient les mêmes ;
ajuster les tailles des images représentatives alignées des groupes d'images, de manière que les tailles de régions de visages des images représentatives ajustées des groupes d'images soient les mêmes ; et
afficher les images représentatives ajustées d'une manière dynamique prédéterminée.

8. Procédé selon la revendication 7, dans lequel lorsqu'il existe plus d'une image représentative pour un groupe d'images, sélectionner de façon aléatoire une ou deux images représentatives à des fins d'affichage.

9. Dispositif permettant d'afficher des images, **caractérisé en ce que** le dispositif comprend :
un module de regroupement (401) conçu pour, lorsqu'une instruction d'ouverture d'un album est reçue, regrouper des images similaires de l'album pour obtenir une pluralité de groupes d'images ;
un module de sélection (402) conçu pour sélectionner, dans chaque groupe d'images, une image en tant qu'image représentative dudit groupe d'images ; et
un module d'affichage (403) conçu pour afficher les images représentatives des groupes d'images ;
dans lequel le module de sélection (402) comprend :
une première unité de sélection (4021) conçue, pour chacun des groupes d'images, sur la base de valeurs d'intensité lumineuse d'images du groupe d'images, pour sélectionner dans le groupe d'images, chaque image qui présente une valeur d'intensité lumineuse inférieure à un seuil d'intensité lumineuse, afin d'obtenir un premier ensemble d'images, le module de sélection (402) étant conçu pour sélectionner ladite image représentative dans ledit premier ensemble d'images ; et
dans lequel le module de sélection comporte en outre :
une unité de transformation conçue pour transformer les images du groupe d'images en images en niveaux de gris ;
une première unité de détermination conçue pour déterminer, pour chacune des images du groupe d'images, un premier nombre et un second nombre de pixels sur la base d'une image en niveaux de gris correspondant à l'image, dans lequel le premier nombre de pixels ayant chacun un niveau de gris inférieur à un premier seuil de niveau de gris et le second nombre de pixels ayant chacun un niveau de gris supérieur à un second seuil de niveau de gris sont présents sur l'image en niveaux de gris correspondant à l'image ;
une deuxième unité de détermination conçue pour déterminer un premier rapport du premier nombre à un nombre total de pixels de l'image en niveaux de gris, et un second rapport du second nombre au nombre total ; et
une troisième unité de détermination conçue pour déterminer le paramètre de qualité de lumière de l'image sur la base du premier rapport et du second rapport, dans lequel la valeur d'intensité lumineuse est une valeur maximale sélectionnée entre le premier rapport et le second rapport.

10. Dispositif selon la revendication 9, dans lequel des images du premier ensemble d'images comprennent un visage, le module de sélection (402) comprenant en outre :
une deuxième unité de sélection (4022) conçue pour, sur la base d'angles de visages d'images du premier ensemble d'images, sélectionner dans le premier ensemble d'images, chaque image qui présente un angle de visage compris dans une plage angulaire prédéterminée, afin d'obtenir un deuxième ensemble d'images.

11. Dispositif selon la revendication 10, dans lequel le module de sélection (402) comprend en outre :
une troisième unité de sélection (4023) conçue pour, sur la base de caractéristiques d'yeux d'images du deuxième ensemble d'images, sélectionner dans le deuxième ensemble d'images, chaque image comprenant un visage sans yeux fermés, pour obtenir un troisième ensemble d'images.

12. Dispositif selon la revendication 11, dans lequel le module de sélection (402) comprend en outre :
une quatrième unité de sélection (4024) conçue pour, sur la base de degrés de clarté représentatifs de la clarté d'images du troisième ensemble d'images, sélectionner dans le troisième ensemble d'images, chaque image qui présente une clarté de visage supérieure ou égale à une clarté prédéterminée, afin d'obtenir l'image représentative du groupe d'images.
